# EUROPEAN PATENT APPLICATION

(11) **EP 4 641 962 A1**
(43) Date of publication of application: **29.10.2025**
(21) Application number: 23933902.1
(22) Date of filing: 25.12.2023
(51) Int. Cl.: H04L 5/00

(54) **SYNCHRONIZATION SIGNAL TRANSMISSION METHOD, ELECTRONIC DEVICE AND COMPUTER-READABLE STORAGE MEDIUM**

(30) Priority: 19.04.2023 CN 202310468587
(71) Applicant: ZTE CORPORATION, Shenzhen, Guangdong 518057 (CN)
(72) Inventor: DAI, Bo, Shenzhen, Guangdong 518057 (CN); YU, Guanghui, Shenzhen, Guangdong 518057 (CN); HU, Liujun, Shenzhen, Guangdong 518057 (CN)
(74) Representative: Canzler & Bergmeier Patentanwälte Partnerschaft mbB
(86) International application number: PCT/CN2023/141360
(87) International publication number: WO 2024/217039

(57) **Abstract**

Provided in the present disclosure is a synchronization signal transmission method, which comprises: sending a primary synchronization signal in a first period; and sending a secondary synchronization signal in a second period, wherein the second period is different from the first period. An electronic device and a computer-readable storage medium are further provided in the present disclosure.

## Description

### TECHNICAL FIELD

The present disclosure relates to the field of communications, and specifically relates to a synchronization signal transmission method, an electronic device, and computer-readable storage medium.

### BACKGROUND

After the development from the first generation (1G) to the fifth generation (5G), the mobile communication technology has experienced a transmission rate increased hundreds of times, which promotes the popularization and prosperity of applications of the mobile internet. With the rapid development of the mobile internet, new services, new businesses, new technologies and new devices are emerging continuously, and the 5G mobile communication system struggles to meet the requirements of flexible and diverse services in the future. Therefore, there is an urgent need for research and development of a next generation mobile communication system.

Currently, the 6th generation (6G) mobile communication standard, also referred to as the sixth generation mobile communication technology, remains a conceptual wireless network mobile communication technology. The design of a 6G system is still in a stage of gathering candidate technologies, and there is no detailed design scheme about the 6G system yet. The 6G system is completely new, and how to design better transmission of synchronization signals in the 6G system needs to be studied and solved.

### SUMMARY

An object of the present disclosure is to provide a synchronization signal transmission method, an electronic device, and computer-readable storage medium, to flexibly use resources and enable a network to achieve flexible time-domain off.

The present disclosure provides a synchronization signal transmission method, including: transmitting a primary synchronization signal with a first period; and transmitting a secondary synchronization signal with a second period, the second period being different from the first period.

The present disclosure further provides a synchronization signal transmission method, including: transmitting a first type synchronization signal over a first slot, the first type synchronization signal including a first type primary synchronization signal and/or a first type secondary synchronization signal; and transmitting a second type synchronization signal different from the first type synchronization signal over a second slot, the second type synchronization signal including a second type primary synchronization signal and/or a second type secondary synchronization signal.

The present disclosure further provides a synchronization signal transmission method, including: transmitting a primary synchronization signal over t1 orthogonal frequency division multiplexing symbols; and transmitting a secondary synchronization signal over t2 orthogonal frequency division multiplexing symbols.

The present disclosure further provides a synchronization signal transmission method, including: transmitting at least one of a primary synchronization signal or a secondary synchronization signal in an amplitude shift keying modulation mode.

The present disclosure further provides a synchronization signal transmission method, including: configuring and transmitting a message relating to a silence interval, the message relating to the silence interval being configured to indicate whether a primary synchronization signal and/or a secondary synchronization signal is transmitted in the silence interval; and transmitting the primary synchronization signal and/or the secondary synchronization signal based on the message relating to the silence interval.

The present disclosure further provides a synchronization signal transmission method, including: transmitting a primary synchronization signal; and transmitting a secondary synchronization signal, a sequence of the primary synchronization signal having repetitive characteristics, and/or a sequence of the secondary synchronization signal having repetitive characteristics.

The present disclosure further provides a synchronization signal transmission method performed by a terminal, including: detecting a first type synchronization signal and acquiring a system message; detecting a second type synchronization signal based on configuration information in the system message; and selecting, based on a result of detecting the first type synchronization signal and/or the second type synchronization signal, an access resource corresponding to a corresponding synchronization signal to access a network.

The present disclosure further provides a synchronization signal transmission method performed by a terminal, including: detecting a primary synchronization signal and a secondary synchronization signal, the primary synchronization signal having a transmission period different from a transmission period of the secondary synchronization signal, or a sequence of the primary synchronization signal having repetitive characteristics, or a sequence of the secondary synchronization signal having repetitive characteristics, or the primary synchronization signal being modulated in an amplitude shift keying modulation mode, or the secondary synchronization signal being modulated in the amplitude shift keying modulation modes; receiving a system information block message, the system information block message including configuration information of the primary synchronization signal and the secondary synchronization signal; and receiving the primary synchronization signal and the secondary synchronization signal based on the configuration information of the primary synchronization signal and the secondary synchronization signal.

The present disclosure further provides a synchronization signal transmission method performed by a terminal, including: receiving a message relating to a silence interval, the message relating to the silence interval being configured to indicate whether a primary synchronization signal and/or a secondary synchronization signal is transmitted in the silence interval; and receiving the primary synchronization signal and/or the secondary synchronization signal based on the message relating to the silence interval.

The present disclosure further provides an electronic device, including: a memory having at least one computer program stored thereon; and at least one processor, the at least one program, executed by the at least one processor, cause the at least one processor to implement the synchronization signal transmission method according to the present disclosure.

The present disclosure further provides a computer-readable storage medium storing a computer program thereon, the computer program, executed by a processor, causes the processor to implement the synchronization signal transmission method according to the present disclosure.

According to the synchronization signal transmission method, the electronic device and the computer-readable storage medium of the present disclosure, resources can be flexibly used to avoid a waste of resources, and flexible time-domain off of a network can be implemented to achieve energy conservation of the network. By enabling the synchronization signal to occupy a plurality of time domain symbols, the coverage of the synchronization signal can be improved, a rate of successfully detecting the synchronization signal can be increased, and the performance of synchronization can be improved.

### BRIEF DESCRIPTION OF DRAWINGS

Accompanying drawings are provided for further understanding of the present disclosure and constitute a part of the specification. Hereinafter, the drawings are intended to explain the technical solutions of the present disclosure together with the following specific implementations, but should not be considered as a limitation of the present disclosure. In the drawings:
FIG. 1 shows a schematic diagram of a time-frequency structure of a synchronization signal/physical broadcast channel block in a 5G system;
FIG. 2 shows a flowchart of a synchronization signal transmission method according to an embodiment of the present disclosure;
FIGs. 3 to 6 show examples of time domain patterns of primary and secondary synchronization signals according to an embodiment of the present disclosure;
FIG. 7 shows a flowchart of a synchronization signal transmission method according to an embodiment of the present disclosure;
FIG. 8 shows a flowchart of a synchronization signal transmission method according to an embodiment of the present disclosure;
FIG. 9 shows a flowchart of a synchronization signal transmission method according to an embodiment of the present disclosure;
FIG. 10 shows a flowchart of a synchronization signal transmission method according to an embodiment of the present disclosure;
FIG. 11 shows a flowchart of a synchronization signal transmission method according to an embodiment of the present disclosure;
FIG. 12 shows a flowchart of a synchronization signal transmission method according to an embodiment of the present disclosure;
FIGs. 13A and 13B show diagrams of silence intervals according to embodiments of the present disclosure;
FIG. 14 shows a flowchart of a synchronization signal transmission method according to an embodiment of the present disclosure;
FIG. 15 shows a flowchart of a synchronization signal transmission method according to an embodiment of the present disclosure;
FIG. 16 shows a flowchart of a synchronization signal transmission method according to an embodiment of the present disclosure;
FIG. 17 shows a flowchart of a synchronization signal transmission method according to an embodiment of the present disclosure;
FIG. 18 shows a flowchart of a synchronization signal transmission method according to an embodiment of the present disclosure;
FIG. 19 is a block diagram of an electronic device according to an embodiment of the present disclosure; and
FIG. 20 is a block diagram of a computer-readable storage medium according to an embodiment of the present disclosure.

### DETAIL DESCRIPTION OF EMBODIMENTS

To improve understanding of the technical solutions of the present disclosure for those skilled in the art, exemplary embodiments will be described more sufficiently below with reference to the accompanying drawings, but the embodiments may be specifically embodied in different forms and should not be construed as limited to the embodiments set forth herein. These embodiments are provided so that the present disclosure will be thorough and complete, and will fully convey the scope the present disclosure to those skilled in the art. It should be appreciated that the figures are used for illustrating the embodiments of the present disclosure only, and dimensions of various components or parts shown in the figures are not drawn to the actual scale.

As used herein, the term "and/or" includes any and all combinations of one or more of the associated listed items.

The terminology used herein is for the purpose of describing particular example embodiments only, and is not intended to be limiting of the claimed subject matter. As used herein, the singular forms "a", "an" and "the" are intended to include the plural forms as well, unless the context clearly indicates otherwise. It will be further understood that the terms "comprise/include" and/or "comprising/including" used in this specification, specify the presence of stated features, integers, steps, operations, elements, and/or components, but do not preclude the presence or addition of one or more other features, integers, steps, operations, elements, components, and/or groups thereof.

It will be understood that, although the terms "first", "second" and the like may be used herein to describe various elements, components, regions, layers and/or sections, these elements, components, regions, layers and/or sections should not be limited by these terms. These terms are only used to distinguish one element, component, region, layer or section from another element, component, region, layer or section. Therefore, a first element, component, region, layer or section discussed below may also be referred to as a second element, component, region, layer or section without departing from the teachings disclosed herein. Further, the first element, component, region, layer or section in an embodiment may be different from the first element, component, region, layer or section in another embodiment.

Unless otherwise defined, all terms (including technical and scientific terms) used herein have the same meaning as commonly understood by those ordinary skills in the art which the presently disclosed subject matter belongs to. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It should also be understood that the description of features or aspects within each exemplary embodiment should generally be considered applicable to other similar features or aspects in other exemplary embodiments, unless the context clearly dictates otherwise. The various embodiments of the present disclosure and various features thereof may be combined with each other without conflict.

In a fourth generation (4G) Long term evolution (LTE) system, synchronization channels (SCHs) are divided into primary SCHs (P-SCHs) and secondary SCHs (S-SCHs). A period of the P-SCH and the S-SCH is fixed to 5ms and positions of the P-SCH and the S-SCH are also fixed, i.e., on last two orthogonal frequency division multiplexing (OFDM) symbols in a first slot, or on a last OFDM symbol in a second slot and a third OFDM symbol in a third slot, with a same frequency domain bandwidth on each symbol. In addition, a physical broadcast channel (PBCH) has a fixed period of 10ms, and is located on first four time domain symbols in the second slot, with a same frequency domain bandwidth on each symbol. The fixed periods and fixed positions of the P-SCH, the S-SCH and the PBCH in 4G system cause a waste of resources of the network, and the network cannot be flexibly turned off in time domain.

In a 5G system, a terminal performs a cell search based on a synchronization signal/physical broadcast channel block (SSB). The SSB is repeatedly transmitted to implement narrow beam polling, thereby achieving the coverage of an entire cell. After being turned on, the terminal obtains an optimal beam by scanning the SSB on each narrow beam, to complete the cell search and then access a network.

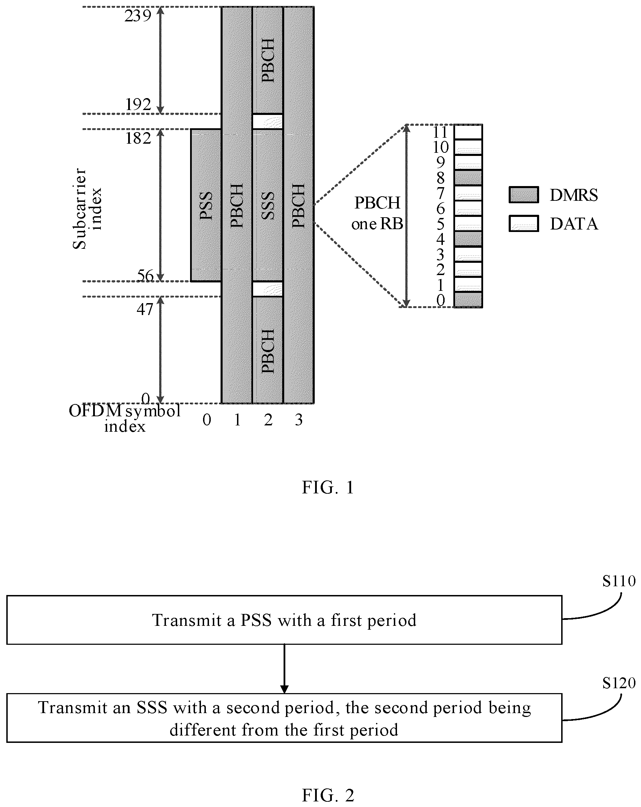

A time-frequency structure of the SSB in the 5G system is shown in FIG. 1. The SSB includes a primary synchronization signal (PSS), a secondary synchronization signal (SSS), and a PBCH and a demodulation reference signal (DMRS) thereof. The SSB occupies four consecutive OFDM symbols in time domain and 240 consecutive subcarriers in frequency domain. Assuming that indexes of the OFDM symbols are 0 to 3, and indexes of the subcarriers are 0 to 239, then the specific conditions of resource occupation of the PSS, the SSS, the PBCH and the DMRS in the SSB are as follows.

The PSS is located on symbol 0, and occupies subcarriers 56 to 182, counted 127 subcarriers in total.

The SSS is located on symbol 2, and occupies subcarriers 56 to 182, counted 127 subcarriers in total.

The PBCH, including PBCH DMRS and PBCH DATA, is located on symbols 1, 2 and 3, occupies subcarriers 0 to 239, counted 240 subcarriers in total on symbol 1, occupies subcarriers 0 to 47 and 192 to 239, counted 96 subcarriers in total on symbol 2, and occupies subcarriers 0 to 239, counted 240 subcarriers in total on symbol 3. The DMRS is located between PBCHs, with a frequency domain density of 1/4. That is, one DMRS is present in every four PBCH resource elements (REs), and twelve REs constitute one resource block (RB).

In the 5G system, synchronization signals are transmitted with a single period interval, and the PSS and the SSS are transmitted in a same period, which causes unnecessary waste of resources, limits dynamic time-domain off of the network, increases a power consumption of the network, and thus is unfavorable for energy conservation of the network.

The method of transmitting synchronization signals in a single period is no longer applicable to the 6G system, and a new method for transmitting synchronization signals is desired, so as to flexibly use resources, avoid a waste of resources, and enable flexible time-domain off of a network to achieve energy conservation of the network.

FIG. 2 shows a flowchart of a synchronization signal transmission method according to an embodiment of the present disclosure. As shown in FIG. 2, the synchronization signal transmission method according to the embodiment of the present disclosure includes the following operations S110 to S120.

In operation S110, transmitting a primary synchronization signal with a first period.

In operation S120, transmitting a secondary synchronization signal with a second period, the second period being different from the first period.

According to the embodiment of the present disclosure, only PSS is transmitted in a first slot, PSS and SSS are both transmitted in a second slot. In other words, in some slots, only PSS and no SSS is transmitted, but in some other slots, both PSS and SSS are transmitted.

According to some implementations of the present disclosure, in the slot for transmitting the PSS and the SSS, the PSS and the SSS may be transmitted over consecutive time domain symbols. According to some other implementations of the present disclosure, in the slot for transmitting the PSS and the SSS, the PSS and the SSS may be transmitted at an interval of a certain number of time domain symbols.

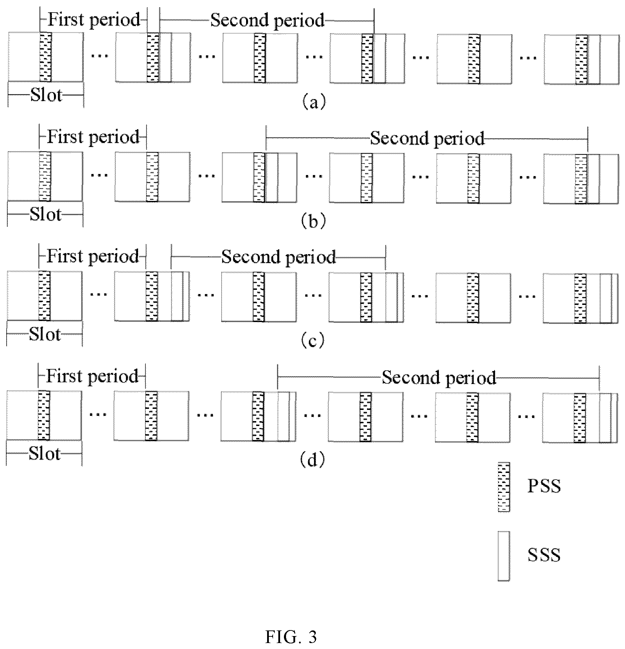

FIG. 3 shows examples of time domain patterns of PSS and SSS.

Referring to (a) of FIG. 3, only PSS is transmitted in first, third and fifth slots as shown, both PSS and SSS are transmitted in second, fourth and sixth slots as shown, and the PSS and the SSS are transmitted over consecutive time domain symbols. A second period for transmitting the SSS is twice a first period for transmitting the PSS.

Referring to (b) of FIG. 3, only PSS is transmitted in first, second, fourth and fifth slots as shown, both PSS and SSS are transmitted in third and sixth slots as shown, and the PSS and the SSS are transmitted over consecutive time domain symbols. The second period for transmitting the SSS is three times the first period for transmitting the PSS.

Referring to (c) of FIG. 3, only PSS is transmitted in first, third and fifth slots as shown, both PSS and SSS are transmitted in second, fourth and sixth slots as shown, and the PSS and the SSS are transmitted at an interval of a certain number of time domain symbols (e.g., one time domain symbol). The second period for transmitting the SSS is twice the first period for transmitting the PSS.

Referring to (d) of FIG. 3, only PSS is transmitted in first, second, fourth and fifth slots as shown, both PSS and SSS are transmitted in third and sixth slots as shown, and the PSS and the SSS are transmitted at an interval of a certain number of time domain symbols (e.g., one time domain symbol). The second period for transmitting the SSS is three times the first period for transmitting the PSS.

It should be appreciated that the time domain patterns of PSS and SSS shown in FIG. 3 are merely examples for illustrating the technical solution of the present disclosure, and do not limit the scope of the present disclosure. The slots shown in FIG. 3 may be consecutive or inconsecutive. The relationship between the first period and the second period is not limited to those shown in FIG. 3. For example, the second period may be four or more times the first period. In addition, for transmitting the PSS and the SSS at an interval of a certain number of time domain symbols, the number of time domain symbols between the PSS and the SSS is not limited to those shown in FIG. 3, For example, the PSS and the SSS may be transmitted at an interval of two or more time domain symbols. Further, the time domain symbols may be, for example, OFDM symbols.

According to an embodiment of the present disclosure, for first and second slots being consecutive, only PSS is transmitted in a first slot, no synchronization signal is transmitted in the second slot, and for third and fourth slots being consecutive, only PSS is transmitted in the third slot, only SSS is transmitted in the fourth slot. In other words, for two consecutive slots, only PSS is transmitted in only one slot, and for another two consecutive slots, only PSS is transmitted in one slot, and only SSS is transmitted in the other slot.

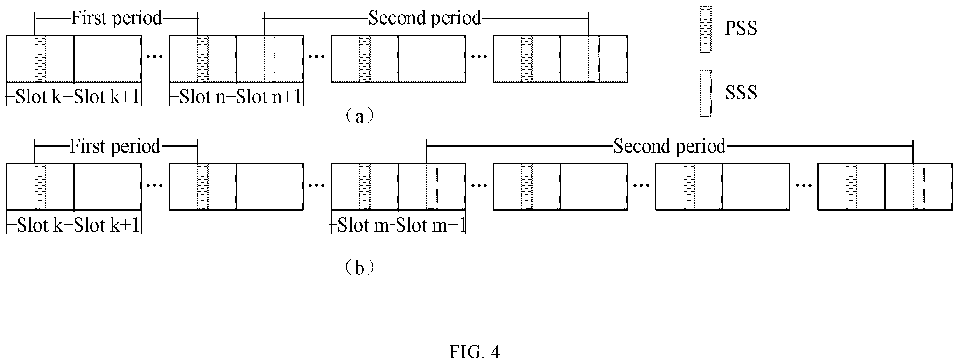

FIG. 4 shows examples of time domain patterns of PSS and SSS.

Referring to (a) of FIG. 4, in a first set of two consecutive slots, i.e., slot k and slot k+1, only PSS is transmitted in slot k, and no synchronization signal is transmitted in slot k+1, and in a second set of two consecutive slots, i.e., slot n and slot n+1, only PSS is transmitted in slot n, and only SSS is transmitted in slot n+1. The second period for transmitting the SSS is twice the first period for transmitting the PSS.

Referring to (b) of FIG. 4, in a first set of two consecutive slots, i.e., slot k and slot k+1, only PSS is transmitted in slot k, and no synchronization signal is transmitted in slot k+1, and in a third set of two consecutive slots, i.e., slot m and slot m+1, only PSS is transmitted in slot m, and only SSS is transmitted in slot m+1. The second period for transmitting the SSS is three times the first period for transmitting the PSS.

It should be appreciated that the time domain patterns of PSS and SSS shown in FIG. 4 are merely examples for illustrating the technical solution of the present disclosure, and do not limit the scope of the present disclosure. The relationship between the first period and the second period is not limited to those shown in FIG. 4. For example, the second period may be four or more times the first period.

According to an embodiment of the present disclosure, the first period may be 5ms, 10ms, 20ms, 40ms, 80ms, 160ms, or 320ms, and the second period is k1 times the first period, k1 being an integer greater than 1.

According to an embodiment of the present disclosure, in a first slot, the PSS and the SSS are transmitted over consecutive time domain symbols, and in a second slot, the PSS and the SSS are transmitted over inconsecutive time domain symbols. In other words, the PSS and the SSS are located on consecutive time domain symbols in some time domain resources (e.g., the first slot), but located on inconsecutive time domain symbols in some other time domain resources (e.g., the second slot).

According to an embodiment of the present disclosure, the number of time domain symbols between the PSS and the SSS may be n, n being a positive integer. For example, n may be one of 1, 2, 3, 4, 6 or 8. The specific value of n may be determined according to a processing time for processing the PSS and a transition time from processing the PSS being completed to a start of receiving the SSS.

According to an embodiment of the present disclosure, the first slot in which the PSS and the SSS are located on consecutive OFDM symbols is set with a third period, and the second slot in which the PSS and the SSS are located on inconsecutive OFDM symbols is set with a fourth period. The third period and the fourth period may be the same as each other or different from each other.

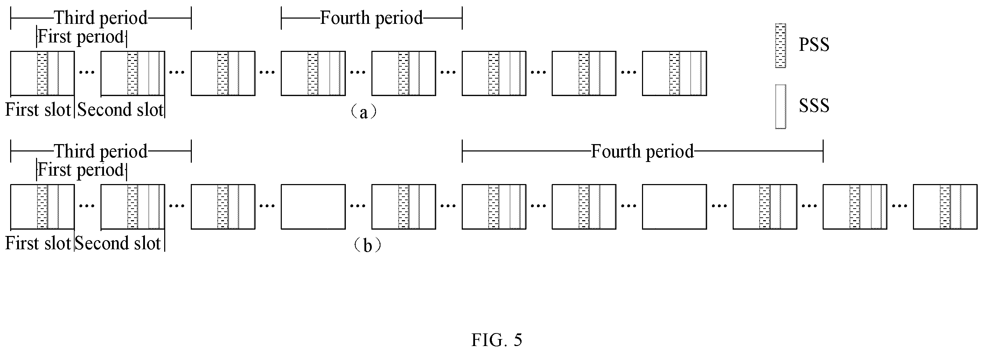

FIG. 5 shows examples of time domain patterns of PSS and SSS.

Referring to (a) of FIG. 5, in first, third, fifth and seventh slots, the PSS and the SSS are located on consecutive time domain symbols, and in second, fourth, sixth and eighth slots, the PSS and the SSS are located on inconsecutive time domain symbols. The third period of the first slot (i.e., the slot in which the PSS and the SSS are located on time domain symbols) is the same as the fourth period of the second slot (i.e., the slot in which the PSS and the SSS are located on inconsecutive time domain symbols).

Referring to (b) of FIG. 5, in first, third, fifth, seventh, ninth and eleventh slots, the PSS and the SSS are located on consecutive time domain symbols, and in second, sixth and tenth slots, the PSS and the SSS are located on inconsecutive time domain symbols, and no synchronization signal is transmitted in fourth and eighth slots. The third period of the first slot (i.e., the slot in which the PSS and the SSS are located on consecutive time domain symbols) is different from the fourth period of the second slot (i.e., the slot in which the PSS and the SSS are located on inconsecutive time domain symbols), and the fourth period is twice the third period.

In the example shown in FIG. 5, the first period for transmitting the PSS remains the same, and the second period for transmitting the SSS is variable (and thus not shown in FIG. 5). Therefore, the second period is different from the first period.

It should be appreciated that the time domain patterns of PSS and SSS shown in FIG. 5 are merely examples for illustrating the technical solution of the present disclosure, and do not limit the scope of the present disclosure. The relationship between the third period and the fourth period is not limited to those shown in FIG. 5. For example, the fourth period may be three or more times the third period. In addition, the time domain symbols may be, for example, OFDM symbols.

According to an embodiment of the present disclosure, the first slot in which the PSS and the SSS are located on consecutive time domain symbols and the second slot in which the PSS and the SSS are located on inconsecutive time domain symbols, as an entire, is transmitted with a fifth period.

According to an embodiment of the present disclosure, the fifth period may include m1 slots. In the fifth period, the PSS and the SSS on consecutive time domain symbols are transmitted in some slots (i.e., the first slot), and the PSS and the SSS on inconsecutive time domain symbols are transmitted in some other slots (i.e., the second slot).

The number of first slots in which the PSS and the SSS are located on consecutive time domain symbols is h1, and the number of second slots in which the PSS and the SSS are located on inconsecutive time domain symbols is h2, h1 and h2 are positive integers. For example, h2 is 1, and h1 is 3; or h1 is 1, and h2 is 1; or h1 is 2, and h2 is 1; or h1 is 7, and h2 is 1; or h1 is 1, and h2 is 3; or h1 is 1, and h2 is 2. It should be appreciated that a sum of h1 and h2 should be less than or equal to the number m1 of slots in the fifth period, i.e., m1≥h1+h2. Moreover, in response to at least one of h1 or h2 being greater than 1, the PSS and/or the SSS may be transmitted at equal intervals, or at unequal intervals, within the fifth period.

For example, the first slot in which the PSS and the SSS are located on consecutive time domain symbols and the second slot in which the PSS and the SSS are located on inconsecutive time domain symbols, as an entire, form a period of 20 slots (i.e., m1= 20). The first slot in which the PSS and the SSS are located on consecutive time domain symbols includes first, sixth, and eleventh slots in the period of 20 slots (i.e., h1=3), and the second slot in which the PSS and the SSS are located on inconsecutive time domain symbols includes a sixteenth slot in the period of 20 slots (i.e., h2=1).

According to an embodiment of the present disclosure, the fifth period may include k ms. For example, the fifth period may include a time length selected from one of 20ms, 40ms, 80ms, 160ms or 320ms.

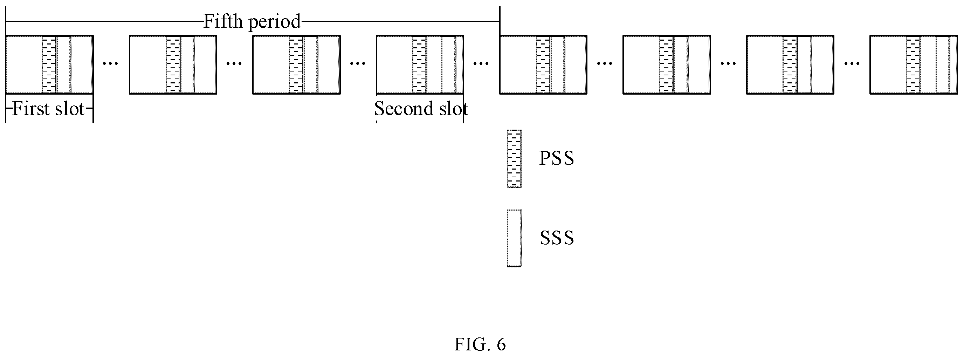

FIG. 6 shows examples of time domain patterns of PSS and SSS.

For example, the first slot in which the PSS and the SSS are located on consecutive time domain symbols and the second slot in which the PSS and the SSS are located on inconsecutive time domain symbols, as an entire, form a period of 20ms. The PSS and the SSS on inconsecutive time domain symbols are transmitted three times with a period of 5ms within first 15ms of the period of 20ms, and the PSS and the SSS on inconsecutive time domain symbols are transmitted once in last 5ms of the period of 20ms.

For another example, the first slot in which the PSS and the SSS are located on consecutive time domain symbols and the second slot in which the PSS and the SSS are located on inconsecutive time domain symbols, as an entire, form a period of 80ms. The PSS and the SSS on inconsecutive time domain symbols are transmitted seven times with a period of 10ms within first 70ms of the period of 80ms, and the PSS and the SSS on inconsecutive time domain symbols are transmitted once in last 10ms of the period of 80ms.

For another example, the first slot in which the PSS and the SSS are located on consecutive time domain symbols and the second slot in which the PSS and the SSS are located on inconsecutive time domain symbols, as an entire, form a period of 80ms. The PSS and the SSS on inconsecutive time domain symbols are transmitted three times with a period of 20ms within first 60ms of the period of 80ms, and the PSS and the SSS on inconsecutive time domain symbols are transmitted once in last 20ms of the period of 80ms.

For another example, the first slot in which the PSS and the SSS are located on consecutive time domain symbols and the second slot in which the PSS and the SSS are located on inconsecutive time domain symbols, as an entire, form a period of 40ms. The PSS and the SSS on inconsecutive time domain symbols are transmitted three times with a period of 10ms within first 30ms of the period of 40ms, and the PSS and the SSS on inconsecutive time domain symbols are transmitted once in last 10ms of the period of 40ms.

It should be appreciated that although specific numerical values are recited in the above examples, they are merely used to illustrate the technical solutions of the present disclosure and should not be construed as limiting the present disclosure.

According to an embodiment of the present disclosure, in a third slot, the PSS and the SSS are transmitted at an interval of y1 time domain symbols, and in a fourth slot, the PSS and the SSS are transmitted at an interval of y2 time domain symbols, y1 and y2 are both positive integers. In other words, the PSS and the SSS are separated by y1 time domain symbols in some time domain resources (e.g., the third slot), and the PSS and the SSS are separated by y2 time domain symbols in some other time domain resources (e.g., the fourth slot).

According to an embodiment of the present disclosure, each of the numbers y1 and y2 of time domain symbols between the PSS and the SSS in the third and fourth slots may be one of 1, 2, 3, 4, 6 or 8. The specific values of y1 and y2 may be determined based on a processing time for processing the PSS and a transition time from processing the PSS being completed to a start of receiving the SSS.

According to an embodiment of the present disclosure, the third slot in which the PSS and the SSS are separated by y1 time domain symbols is set with a sixth period, and the fourth slot in which the PSS and the SSS are separated by y2 time domain symbols is set with a seventh period. The sixth period and the seventh period may be the same as each other or different from each other.

According to an embodiment of the present disclosure, the third slot in which the PSS and the SSS are separated by y1 time domain symbols and the fourth slot in which the PSS and the SSS are separated by y2 time domain symbols, as an entire, is transmitted with an eighth period.

According to an embodiment of the present disclosure, the eighth period may include m2 slots. In the eighth period, the PSS and the SSS are transmitted at an interval of y1 time domain symbols in some slots (i.e., the third slot), and are transmitted at an interval of y2 time domain symbols in some other slots (i.e., the fourth slot).

The number of third slots in which the PSS and the SSS are separated by y1 time domain symbols is h3, and the number of fourth slots in which the PSS and the SSS are separated by y2 time domain symbols is h4, h3 and h4 are positive integers. For example, h3 is 1, and h4 is 3; or h3 is 1, and h4 is 1; or h3 is 2, and h4 is 1; or h3 is 7, and h4 is 1; or h3 is 1, and h4 is 3; or h3 is 1, and h4 is 2. It should be appreciated that a sum of h3 and h4 should be less than or equal to the number m2 of slots in the eighth period, i.e., m2≥h3+h4. Moreover, in response to at least one of h3 or h4 being greater than 1, the PSS and/or the SSS may be transmitted at equal intervals, or at unequal intervals, within the eighth period.

For example, the third slot in which the PSS and the SSS are separated by y1 time domain symbols and the fourth slot in which the PSS and the SSS are separated by y2 time domain symbols, as an entire, form a period of 20 slots (i.e., m2=20). The third slot in which the PSS and the SSS are separated by y1 time domain symbols includes first, sixth, and eleventh slots in the period of 20 slots (i.e., h3=3), and the fourth slot in which the PSS and the SSS are separated by y2 time domain symbols includes a sixteenth slot in the period of 20 slots (i.e., h4=1).

According to an embodiment of the present disclosure, the eighth period may include k ms. For example, the eighth period may include a time length selected from one of 20ms, 40ms, 80ms, 160ms or 320ms.

It should be appreciated that the "the PSS and the SSS on consecutive time domain symbols" described in the foregoing embodiments may be regarded as "the PSS and the SSS separated by 0 time domain symbol", and therefore, the examples described in conjunction with FIGs. 5 and 6 are also applicable and thus are not repeated here.

Although the PSS is shown prior to the SSS in the examples of time domain patterns of PSS and SSS in FIGs. 3 to 6, it will be readily understood by those skilled in the art that the PSS may be subsequent to the SSS.

Positions of the PSS and the SSS in the slots are not limited to those shown in FIGs. 3 to 6. For example, the PSS and the SSS may be located on last time domain symbols of a slot, i.e., the PSS or the SSS may be transmitted over a last time domain symbol of a slot; or the PSS and the SSS may be located on first time domain symbols of a slot, i.e., the PSS or the SSS may be transmitted over a first time domain symbol of a slot; or the PSS and the SSS may be located on two adjacent slots, i.e., one of the PSS and the SSS may be transmitted over a last time domain symbol of a former slot, and the other one of the SSS and the PSS may be transmitted over a first time domain symbol of a latter slot.

According to an embodiment of the present disclosure, the first period may be a non-fixed period. The SSS may be transmitted after a preset time being elapsed after transmitting the PSS; or the transmission of the PSS may indicate whether there is a subsequent transmission of the SSS.

According to an embodiment of the present disclosure, the transmission of the PSS indicates whether there is a subsequent transmission of the SSS by one of the following modes: in response to a sequence of the PSS being a first sequence, it indicates that there is a subsequent transmission of the SSS, and in response to the sequence of the PSS being a second sequence different from the first sequence, it indicates that there is no subsequent transmission of the SSS; in response to a subcarrier interval for transmitting the PSS being a first subcarrier interval, it indicates that there is a subsequent transmission of the SSS, and in response to the subcarrier interval for transmitting the PSS being a second subcarrier interval different from the first subcarrier interval, it indicates that there is no subsequent transmission of the SSS; or in response to a time domain symbol for transmitting the PSS being an OFDM symbol, it indicates that there is a subsequent transmission of the SSS, and in response to the time domain symbol for transmitting the PSS being an on-off keying (OOK) symbol, it indicates that there is no subsequent transmission of the SSS.

According to an embodiment of the present disclosure, one PSS may correspond to one SSS; or multiple PSSs may correspond to one SSS. For example, one SSS may be transmitted after a plurality of PSSs are transmitted at equal intervals or unequal intervals.

According to embodiments of the present disclosure, since the PSS is transmitted with a first period, the SSS is transmitted with a second period different from the first period, and various time domain patterns of PSS and SSS are provided, resources can be flexibly used to avoid a waste of resources, enable flexible time-domain off of a network to achieve energy conservation of the network, and furthermore, allow better coexistence with the 5G system and better multiplexing with PBCH.

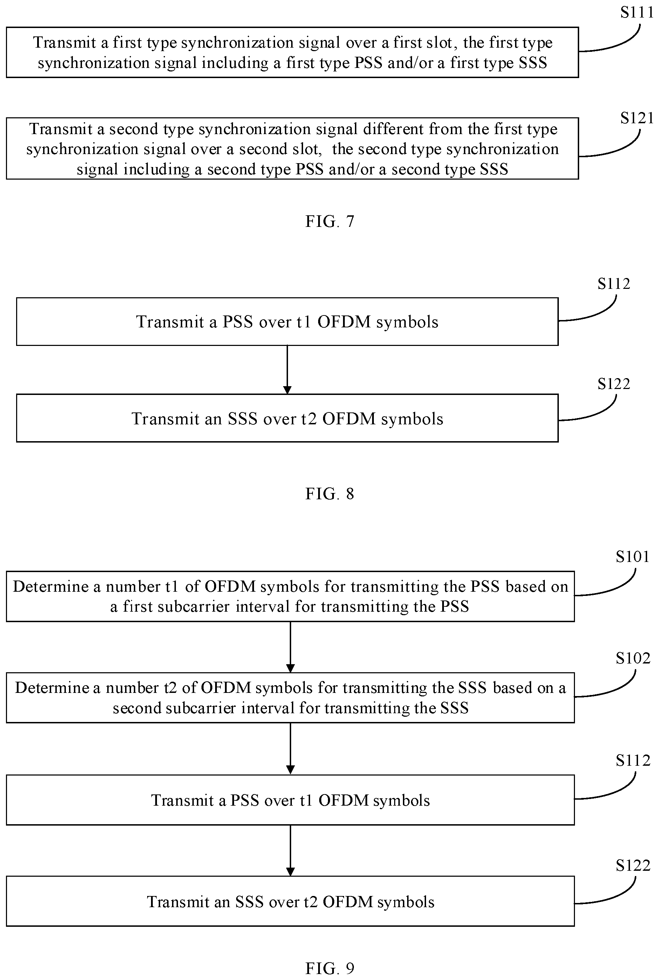

FIG. 7 shows a flowchart of a synchronization signal transmission method according to an embodiment of the present disclosure. As shown in FIG. 7, the synchronization signal transmission method according to the embodiment of the present disclosure includes the following operations S111 to S121.

In operation S111, transmitting a first type synchronization signal over a first slot, the first type synchronization signal including a first type PSS and/or a first type SSS.

In operation S121, transmitting a second type synchronization signal different from the first type synchronization signal over a second slot, the second type synchronization signal including a second type PSS and/or a second type SSS.

A system information block (SIB) may include configuration information of the first type synchronization signal; and/or configuration information of the second type synchronization signal; and/or access resources corresponding to the first type synchronization signal; and/or access resources corresponding to the second type synchronization signal.

According to an embodiment of the present disclosure, the first type synchronization signal is different from the second type synchronization signal in at least one of the following aspects:
the first type PSS is different from the second type PSS; or
the first type SSS is different from the second type SSS; or
the first type synchronization signal is transmitted in an amplitude shift keying (ASK) modulation mode, but the second type synchronization signal is transmitted in an OFDM symbol mode; or
the first type synchronization signal is transmitted in an OFDM symbol mode, while the second type synchronization signal is transmitted in an ASK modulation mode; or
a time-frequency position relationship between the first type PSS and the first type SSS is different from a time-frequency position relationship between the second type PSS and the second type SSS; or
the first type synchronization signal has a sequence different from a sequence of the second type synchronization signal; or
the first type synchronization signal has a period different from a period of the second type synchronization signal; or
the first type synchronization signal corresponds to a cell ID different from a cell ID corresponding to the second type synchronization signal; or
the first type synchronization signal and the second type synchronization signal belong to a same cell including a plurality of subcells, and the first type synchronization signal corresponds to a subcell ID different from a subcell ID corresponding to the second type synchronization signal; or
the first type synchronization signal corresponds to a frequency domain bandwidth different from a frequency domain bandwidth corresponding to the second type synchronization signal; or
the first type synchronization signal corresponds to a time-domain length different from a time-domain length corresponding to the second type synchronization signal; or
the first type synchronization signal corresponds to a subcarrier interval different from a subcarrier interval corresponding to the second type synchronization signal; or
the first type synchronization signal is configured for a detection of a terminal before obtaining a system message, and the second type synchronization signal is configured for a detection of the terminal after obtaining the system message; or
the first type synchronization signal is configured for a measurement of a terminal, and the second type synchronization signal is configured for the measurement of the terminal and a selection of access resources; or
the first type synchronization signal is transmitted in a periodic mode, and the second type synchronization signal is transmitted in a non-periodic mode or a triggering mode; or
the first type synchronization signal is transmitted by a 6G synchronization signal sequence, and the second type synchronization signal is transmitted by a 5G synchronization signal sequence.

According to an embodiment of the present disclosure, the first type synchronization signal and the second type synchronization signal have a same PBCH; and/or the first type synchronization signal and the second type synchronization signal have a same SIB; and/or the first type synchronization signal and the second type synchronization signal belong to a same cell; and/or the first type synchronization signal and the second type synchronization signal correspond to different access resources, respectively, and both the first type synchronization signal and the second type synchronization signal are configured for a measurement of a terminal and a selection of access resources of the terminal; and/or the first type synchronization signal carries information of a first cell ID, and the second type synchronization signal carries information of a second cell ID, information of a cell ID includes information of the first cell ID and information of the second cell ID; and/or the first type synchronization signal and the second type synchronization signal are located in a same bandwidth part, the terminal selects access resources based on the first type synchronization signal and the second type synchronization signal; and/or the first type synchronization signal is a basic type synchronization signal, and the second type synchronization signal is an additional type synchronization signal.

It will be recognized that the number of types of synchronization signals is not limited to two, and may be greater than two. In addition, different types of synchronization signals may be overlapped in time domain or not, and in response to different types of synchronization signals being overlapped in time domain, the different types of synchronization signals may have a same frequency domain position or different frequency domain positions. Different types of synchronization signals may be located in one bandwidth part (BWP) or in different BWPs.

The above embodiments of the present disclosure will be described in detail below in conjunction with specific examples.

In a specific example 1, 5G synchronization signals (i.e., a first type synchronization signal) are transmitted in some slots (e.g., a first slot), and 6G synchronization signals (i.e., a second type synchronization signal) are transmitted in some other slots (e.g., a second slot). The 6G PSS and the 5G PSS are different, and the 6G SSS and the 5G SSS may be the same or different. An SIB of a 6G system includes: configuration information of a 5G SSB (e.g., see FIG. 1); configuration information of a 6G synchronization signal; information of access resources corresponding to the 5G SSB; and information of access resources corresponding to the 6G synchronization signal. A terminal detects the 5G SSB and the 6G synchronization signal according to the configuration information. The 5G SSB has a plurality of indexes, the 6G synchronization signal has a plurality of indexes, each index corresponds to a beam index, and each beam index corresponds to a set of access resources. By detecting the synchronization signal, the terminal selects an optimal access resource corresponding to the synchronization signal to access a network.

In a specific example 2, a cell includes a plurality of cell IDs, synchronization signals corresponding to a cell ID1 (i.e., a first type synchronization signal) are transmitted in some slots (e.g., a first slot), synchronization signals corresponding to a cell ID2 (i.e., a second type synchronization signal) are transmitted in some slots (e.g., a second slot), so on and so forth, and synchronization signals corresponding to a cell IDk (i.e., a k^{th} type synchronization signal) are transmitted in some slots (e.g., a k^{th} slot), k is an integer greater than 1. An SIB of a 6G system includes: configuration information of synchronization signals corresponding to k cell IDs; and information of access resources corresponding to the synchronization signal corresponding to each cell ID. A terminal detects the synchronization signals corresponding to the K cell IDs according to the configuration information. The synchronization signal corresponding to each cell ID has a plurality of indexes, each index corresponds to a beam index, and each beam index corresponds to a set of access resources. By detecting the synchronization signal, the terminal selects an optimal access resource corresponding to the synchronization signal to access a network.

In a specific example 3, synchronization signals in a sequence 1 (i.e., a first type synchronization signal) are transmitted in some slots (e.g., a first slot), synchronization signals in a sequence 2 (i.e., a second type synchronization signal) are transmitted in some slots (e.g., a second slot), so on and so forth, and synchronization signals in a sequence k (i.e., a k^{th} type synchronization signal) are transmitted in some slots (e.g., a k^{th} slot), k is an integer greater than 1. An SIB of a 6G system includes: configuration information of k types of synchronization signals; and information of access resources corresponding to each type of synchronization signals. A terminal detects the k types of synchronization signals according to the configuration information. Each type of synchronization signals has a plurality of indexes, each index corresponds to a beam index, and each beam index corresponds to a set of access resources. By detecting the synchronization signal, the terminal selects an optimal access resource corresponding to the synchronization signal to access a network, for example, selects an access resource corresponding to the synchronization signal with a best detection result, or selects any access resource corresponding to the synchronization signal with a detection result exceeding a threshold.

In a specific example 4, the first type synchronization signal is transmitted in a periodic mode, and the second type synchronization signal is transmitted in a non-periodic mode or a triggering mode. The triggering mode includes that a base station triggers a transmission of the second type synchronization signal through signaling or a signal, or the base station deactivates a transmission of the second type synchronization signal through signaling or a signal (i.e., instructing, by signaling or a signal, to stop a transmission of the second type synchronization signal); or the base station determines whether to transmit the second type synchronization signal by itself, and the terminal determines whether the second type synchronization signal is present by blind detecting. In addition, the terminal may send a request signal or request information to the base station to request the base station to transmit the second type synchronization signal.

In a specific example 5, the first type synchronization signal includes a plurality of first type synchronization signal indexes, each first type synchronization signal index corresponds to one second type synchronization signal, and the second type synchronization signal includes a plurality of second type synchronization signal indexes. Each first type synchronization signal index corresponds to a beam index, e.g., a wide beam index, and each second type synchronization signal index corresponds to a beam index, e.g., a narrow beam index. Since each first type synchronization signal index corresponds to one second type synchronization signal, and the second type synchronization signal includes a plurality of second type synchronization signal indexes, that is, one wide beam index includes one or more narrow beam indexes, or the first type synchronization signal index and the second type synchronization signal index have a quasi-co-location (QCL) relationship therebetween. The terminal detects first type synchronization signals first, selects a target first type synchronization signal according to a detection result of the first type synchronization signals, then detects a second type synchronization signal corresponding to the target first type synchronization signal, and selects a target second type synchronization signal index according to a detection result of the second type synchronization signal, so as to access a network according to an access resource corresponding to the target second type synchronization signal index.

In a specific example 6, the PSS and/or the SSS of the first type synchronization signal carries information of a first cell ID, and the PSS and/or the SSS of the second type synchronization signal carries information of a second cell ID. Information of a cell ID includes information of the first cell ID and information of the second cell ID. For example, the PSS and/or the SSS of the first type synchronization signal carries first n bits of information of the cell ID, and the PSS and/or the SSS of the second type synchronization signal carries remaining bits of information of the cell ID; or the PSS and/or the SSS of the first type synchronization signal carries a cell ID group including n cell IDs, and the PSS and/or the SSS of the second type synchronization signal carries subcell information in the cell ID group.

In a specific example 7, the first type synchronization signal is a synchronization signal of a first system, and the second type synchronization signal is a synchronization signal of a second system. A base station transmits the first type synchronization signal and the second type synchronization signal. A terminal detects the first type synchronization signal and the second type synchronization signal, and selects corresponding access resources to access a network according to a detection result. For example, the first system is a 6G system, and the second system is a 5G system. In a 6G network, the base station transmits a synchronization signal of the 6G system and a synchronization signal of the 5G system, and transmits configuration information of the synchronization signal of the 5G system through a 6G SIB. That is, the configuration information of the synchronization signal of the 5G system is included in the 6G SIB. The configuration information of the synchronization signal of the 5G system may include at least one of: position information of the synchronization signal of the 5G system in time and frequency domains; information of an access resource corresponding to the synchronization signal of the 5G system; or a QCL relationship between the synchronization signal of the 6G system and the synchronization signal of the 5G system. The synchronization signal of the 6G system and the synchronization signal of the 5G system may have a QCL relationship therebetween, for example, may have a same or similar large-scale characteristic (e.g., Doppler spread, spatial filtering, or the like) parameters. After obtaining the 6G SIB, the terminal detects the synchronization signal of the 5G system according to the configuration information of the synchronization signal of the 5G system in the 6G SIB, and selects a corresponding access resource to access a network according to detection results of the synchronization signal of the 5G system and the synchronization signal of the 6G system.

QCL may include QCL type A, QCL type B, QCL type C, and QCL Type D. Two ports satisfying the QCL relationship means that large-scale information of one port can be derived from large-scale information of the other port, the large-scale information includes, but is not limited to: Doppler shift, Doppler spread, average delay, delay spread, and a spatial Rx parameter. QCL types include:
'QCL-TypeA': {Doppler shift, Doppler spread, average delay, delay spread};
'QCL-TypeB': {Doppler shift, Doppler spread};
'QCL-TypeC': {Doppler shift, average delay}; and
'QCL-TypeD': {Spatial Rx parameter}.

In a specific example 8, the first type synchronization signal includes PSS and SSS, and the second type synchronization signal includes only the SSS. In response to the number of types of synchronization signals being greater than or equal to two, some types of synchronization signals include the PSS and the SSS, some other types of synchronization signals include only the SSS, and there is a correspondence relationship between the types of synchronization signals including the PSS and the SSS and the types of synchronization signals including only the SSS. The first type synchronization signal may be considered as a basic type synchronization signal corresponding to basic functions including, for example, synchronization, measurement, or access, or the like, and the second type synchronization signal may be considered as an additional type synchronization signal corresponding to additional functions including, for example, auxiliary measurement, auxiliary access, or the like. The terminal may select an access resource to access a network according to the first type synchronization signal only; or may select the access resource to access the network according to both the first type synchronization signal and the second type synchronization signal.

FIG. 8 shows a flowchart of a synchronization signal transmission method according to an embodiment of the present disclosure. As shown in FIG. 8, the synchronization signal transmission method according to the embodiment of the present disclosure includes the following operations S112 to S122.

In operation S112, transmitting a PSS over t1 OFDM symbols.

In operation S122, transmitting an SSS over t2 OFDM symbols.

FIG. 9 shows a flowchart of a synchronization signal transmission method according to an embodiment of the present disclosure. As shown in FIG. 9, the synchronization signal transmission method according to the embodiment of the present disclosure may further include the following operations S101 to S102.

In operation S101, determining a number t1 of OFDM symbols for transmitting the PSS according to a first subcarrier interval for transmitting the PSS.

In operation S102, determining a number t2 of OFDM symbols for transmitting the SSS according to a second subcarrier interval for transmitting the SSS.

According to an embodiment of the present disclosure, a correspondence relationship between a subcarrier interval and a number of OFDM symbols may be predetermined (or predefined). For example, the subcarrier interval of 15kHz corresponds to one OFDM symbol; the subcarrier interval of 30kHz corresponds to two OFDM symbols; the subcarrier interval of 60kHz corresponds to three OFDM symbols; and the subcarrier interval of 120kHz corresponds to four OFDM symbols.

According to an embodiment of the present disclosure, a set of subcarrier intervals, and a correspondence relationship between the set of subcarrier intervals and a number of OFDM symbols may be predetermined (or predefined), each set of subcarrier intervals includes one or more subcarrier intervals.

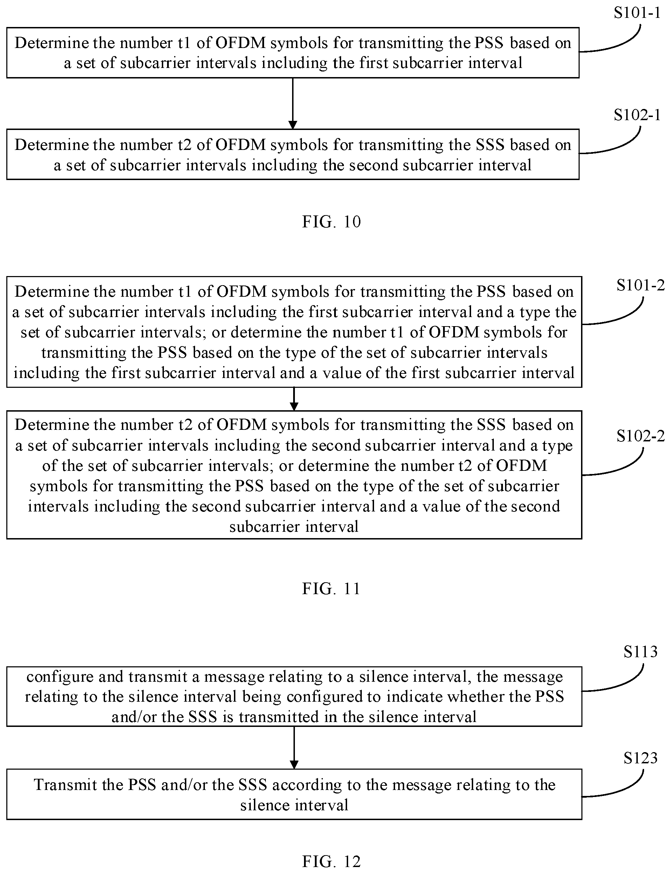

As shown in FIG. 10, determining the number t1 of OFDM symbols for transmitting the PSS according to the first subcarrier interval for transmitting the PSS (i.e., operation S101) and determining the number t2 of OFDM symbols for transmitting the SSS according to the second subcarrier interval for transmitting the SSS (i.e., operation S102) may include the following operations S101-1 and S102-1, respectively.

In operation S101-1, determining the number t1 of OFDM symbols for transmitting the PSS according to a set of subcarrier intervals including the first subcarrier interval.

In operation S102-1, determining the number t2 of OFDM symbols for transmitting the SSS according to a set of subcarrier intervals including the second subcarrier interval.

For example, a set of subcarrier intervals {15KHz, 30KHz, 60KHz} corresponds to one OFDM symbol; and a set of subcarrier intervals {120KHz, 240KHz, 480KHz} corresponds to two OFDM symbols. For another example, a subcarrier interval set {15KHz, 30KHz} corresponds to 1 OFDM symbol; a set of subcarrier intervals {60KHz, 120KHz} corresponds to two OFDM symbols; and a set of subcarrier intervals {240KHz, 480KHz} corresponds to four OFDM symbols.

According to an embodiment of the present disclosure, a set of subcarrier intervals, a type of each set of subcarrier intervals, and a correspondence relationship between the set of subcarrier intervals and a number of OFDM symbols may be predetermined (or predefined), the subcarrier intervals in a first type set of subcarrier intervals correspond to a same number of OFDM symbols, the subcarrier intervals in a second type set of subcarrier intervals correspond to different numbers of OFDM symbols respectiely, each first type set of subcarrier intervals includes one or more subcarrier intervals, and each second type set of subcarrier intervals includes a plurality of subcarrier intervals.

As shown in FIG. 11, determining the number t1 of OFDM symbols for transmitting the PSS according to the first subcarrier interval for transmitting the PSS (i.e., operation S101) and determining the number t2 of OFDM symbols for transmitting the SSS according to the second subcarrier interval for transmitting the SSS (i.e., operation S102) may include the following operations S101-2 and S102-2, respectively.

In operation S101-2, determining the number t1 of OFDM symbols for transmitting the PSS according to a set of subcarrier intervals including the first subcarrier interval and a type of the set of subcarrier intervals; or determining the number t1 of OFDM symbols for transmitting the PSS according to the type of the set of subcarrier intervals including the first subcarrier interval and a value of the first subcarrier interval.

In operation S102-2, determining the number t2 of OFDM symbols for transmitting the SSS according to a set of subcarrier intervals including the second subcarrier interval and a type of the set of subcarrier intervals; or determining the number t2 of OFDM symbols for transmitting the PSS according to the type of the set of subcarrier intervals including the second subcarrier interval and a value of the second subcarrier interval.

In response to determining that the type of the set of subcarrier intervals including the subcarrier interval is the first type set of subcarrier intervals, the number of OFDM symbols corresponding to the set of subcarrier intervals is to be determined according to the set of subcarrier intervals. In response to determining that the type of the set of subcarrier intervals including the subcarrier interval is the second type set of subcarrier intervals, the number of OFDM symbols corresponding to the subcarrier interval is to be determined according to the value of the subcarrier interval.

For example, the set of subcarrier intervals {15KHz, 30KHz, 60KHz} is the first type set of subcarrier intervals, and corresponds to one OFDM symbol; the set of subcarrier intervals {120KHz, 240KHz, 480KHz} is the second type set of subcarrier intervals, the subcarrier interval of 120kHz corresponds to two OFDM symbols; the subcarrier interval of 240kHz corresponds to four OFDM symbols; and the subcarrier interval of 480kHz corresponds to eight OFDM symbols. For another example, the set of subcarrier intervals {15KHz, 30KHz} is the first type set of subcarrier intervals, and corresponds to one OFDM symbol; the set of subcarrier intervals {60KHz, 120KHz} is the second type set of subcarrier intervals, the subcarrier interval of 60kHz corresponds to two OFDM symbols, and the subcarrier interval of 120kHz corresponds to four OFDM symbols; the set of subcarrier intervals {240KHz, 480KHz} is the first type set of subcarrier intervals, and corresponds to 16 OFDM symbols.

According to an embodiment of the present disclosure, the type of each set of subcarrier intervals may be defined according to at least one of: a spectrum type; a licensed or unlicensed spectrum; or a vehicle to vehicle (V2V) network or a cellular network.

According to an embodiment of the present disclosure, the number t1 is 1, and the number t2 is an integer greater than 1; or the number t2 is 1, and the number t1 is an integer greater than 1. In other words, the PSS may occupy one OFDM symbol, and the SSS occupies more than one OFDM symbols; or the PSS may occupy more than one OFDM symbols, and the SSS occupies one OFDM symbol.

According to an embodiment of the present disclosure, the number t2 of OFDM symbols for transmitting the SSS may be determined by one of: the number t2 indicated by the PSS; one of a plurality of preset values of the number t2; or the number t2 indicated by a system information block (SIB).

According to an embodiment of the present disclosure, the number t1 of OFDM symbols for transmitting the PSS may be determined by one of: one of a plurality of preset values of the number t1; or the number t1 indicated by the SIB.

In response to the number t1 and/or the number t2 having a plurality of preset values, the terminal may determine the number t1 and/or t2 through blind detecting.

According to an embodiment of the present disclosure, the PSS and the SSS may be transmitted alternately in response to at least one of t1 or t2 being greater than 1. For example, PSSs in a number of k1, SSSs in number of k2, PSSs in a number of k3, SSSs in a number of k4, ... are sequentially transmitted and then cycled, and k1, k2, k3 and k4 are positive integers.

According to embodiments of the present disclosure, through the PSS and/or the SSS occupying multiple time domain symbols, the coverage of the synchronization signal can be improved, a rate of successfully detecting the synchronization signal can be improved, and the performance of synchronization can be improved.

According to an embodiment of the present disclosure, at least one of the PSS or the SSS may be transmitted in an ASK modulation mode. For example, the PSS is transmitted in an ASK symbol mode, and the SSS is transmitted in an OFDM symbol mode; or the PSS is transmitted in an OFDM symbol mode, and the SSS is transmitted in an ASK symbol mode; or both the PSS and the SSS are transmitted in an ASK symbol mode.

According to an embodiment of the present disclosure, a number t3 of ASK symbols for transmitting the PSS or the SSS is k4 times a number t4 of OFDM symbols t4 for transmitting the SSS or the PSS, and k4 is an integer greater than 1. That is, in response to the synchronization signals being transmitted over ASK symbols, a length of a plurality of ASK symbols may equal to a length of one OFDM symbol. For example, the PSS is transmitted over on-off keying (OOK) symbols (the OOK symbol is a special ASK symbol), the SSS is transmitted over OFDM symbols, and a time-domain length of the OOK symbols corresponding to the PSS is equal to a time-domain length of one OFDM symbol. For example, the PSS may correspond to OOK symbols in a number of 2, 4, 8, 16, 32, or 64, and time-domain lengths of the OOK symbols may correspond to time-domain lengths of OFDM symbols in a number of 1, 2, 4, or 8, respectively.

Transmitting the synchronization signal in the ASK mode can reduce the power consumption of the terminal for detecting, but transmitting the synchronization signal in the OFDM mode can achieve better compatibility with other physical channels, thereby reducing a complexity of implementing and improving the performance of detecting.

FIG. 12 shows a flowchart of a synchronization signal transmission method according to an embodiment of the present disclosure. As shown in FIG. 12, the synchronization signal transmission method according to the embodiment of the present disclosure includes the following operations S113 to S123.

In operation S113, configuring and transmitting a message relating to a silence interval, the message relating to the silence interval being configured to indicate whether the PSS and/or the SSS is transmitted in the silence interval.

In operation S123, transmitting the PSS and/or the SSS according to the message relating to the silence interval. In other words, the PSS and/or the SSS may not be transmitted in the silence interval indicated by the message relating to the silence interval.

According to an embodiment of the present disclosure, the message relating to the silence interval may be transmitted through an SIB message or a silence indication signal.

During the terminal initially accessing a network, the terminal obtains the PSS and the SSS through blind detecting. After the terminal accessing the network, the network may indicate transmission periods of the PSS and the SSS through an SIB message. In addition, the silence interval, in which the PSS and the SSS are not transmitted, may be indicated by an SIB message, and therefore, the silence interval may be considered as a deactivation region of the PSS and the SSS.

The silence interval may be periodic, non-periodic, or generated by triggering.

According to an embodiment of the present disclosure, the silence interval is generated by one of: being triggered through a downlink proprietary signal; being triggered through downlink control information; determining whether the corresponding silence interval is to be triggered according to whether latest PSS and SSS exist prior to the silence interval; or determining whether the corresponding silence interval is to be triggered according to whether first PSS and SSS exist after the silence interval starts.

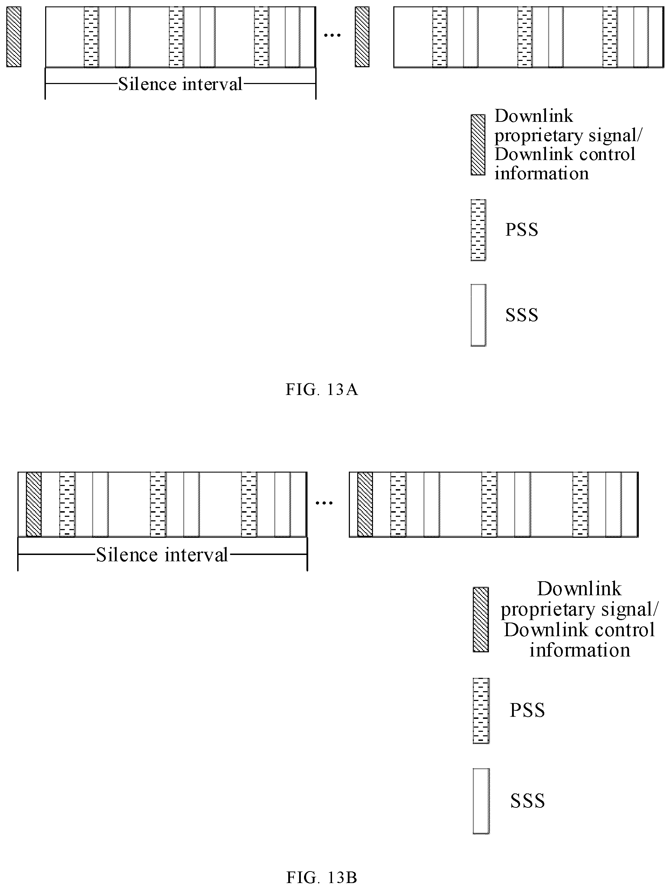

Whether to trigger the silence interval may be determined by a downlink proprietary signal or downlink control information prior to the silence interval, as shown in FIG. 13A, or determined according to a downlink proprietary signal or downlink control information prior to first PSS and SSS after the silence interval starts, as shown in FIG. 13B.

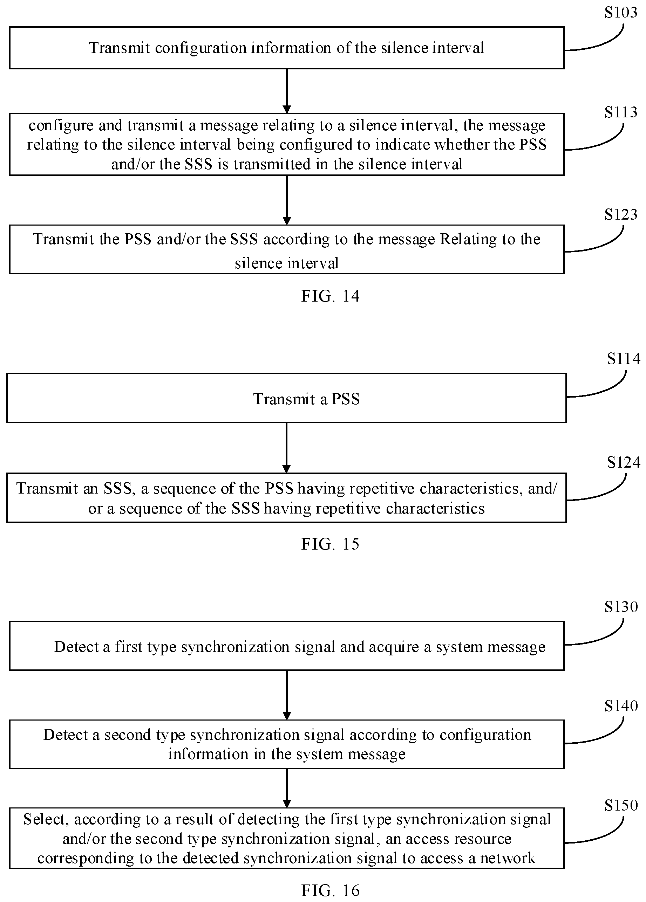

FIG. 14 shows a flowchart of a synchronization signal transmission method according to an embodiment of the present disclosure. As shown in FIG. 14, the synchronization signal transmission method according to the embodiment of the present disclosure may further include the following operation S103.

In operation S103, transmitting configuration information of the silence interval. The configuration information of the silence interval may include at least one of: a start time of the silence interval; a time duration of the silence interval; a period of the silence interval; a triggering mode for triggering the silence interval; or a period of transmitting the PSS and/or the SSS in the silence interval.

According to an embodiment of the present disclosure, a transmission position for transmitting the message relating to the silence interval may be determined based on positions of the PSS and/or the SSS, or may be configured through an SIB. For example, the transmission position for transmitting the message relating to the silence interval may be located at a position, configured by the SIB, shifted from the PSS and the SSS.

According to embodiments of the present disclosure, by providing the silence interval with no the synchronization signal, better energy conservation of the network can be achieved, and the spectral efficiency can be improved.

FIG. 15 shows a flowchart of a synchronization signal transmission method according to an embodiment of the present disclosure. As shown in FIG. 15, the synchronization signal transmission method according to the embodiment of the present disclosure includes the following operations S114 to S124.

In operation S114, transmitting a PSS.

In operation S124, transmitting an SSS, a sequence of the PSS having repetitive characteristics, and/or a sequence of the SSS having repetitive characteristics.

The repetitive characteristics refer to that the sequence of the synchronization signal (e.g., the PSS and the SSS) itself is repeatedly spread. For example, for a sequence [S₀, S₁, ..., Sₙ₋₁], after being repeatedly spread, the repeatedly spread sequence may be [S₀...S₀, S₁...S₁, ..., Sₙ₋₁... Sₙ₋₁].

In addition, the sequence of at least one of the PSS or the SSS may correspond to, and be repeatedly and alternately mapped with, a plurality of sequences.

For example, for two sequences of the synchronization signal, i.e., [S₀, S₁, ..., Sₙ₋₁] and [T₀, T₁, ..., Tₙ₋₁], after being repeatedly and alternately mapped, the repeatedly and alternately mapped sequence is:
[S₀...S₀, T₀...T₀, S₁...S₁, T₁...T₁, ..., Sₙ₋₁...Sₙ₋₁, Tₙ₋₁...Tₙ₋₁].

According to an embodiment of the present disclosure, synchronization channels at different frequency points may correspond to different numbers of repetitions; or the number of repetitions may be determined according to a subcarrier interval. For example, the subcarrier interval of 60KHz corresponds to eight repetitions, the subcarrier interval of 120KHz corresponds to four repetitions, the subcarrier interval of 240KHz corresponds to two repetitions, and the subcarrier interval of 480KHz corresponds to one repetition.

According to an embodiment of the present disclosure, the PSS and/or the SSS each may adopt a sequence of 0 and 1, and the quantity of 0 is the same as the quantity of 1. For example, in response to the PSS and/or the SSS being transmitted over OOK symbols, the sequence of the synchronization signal may be:
{0,1,0,0,1,1,0,1,1,0,1,0,0,1,1,0,1,0},
{1,1,0,1,0,0,1,1,0,1,0,0,1,0,0,1,1,0,1,1,0,1,0,0,1,1,0,1,0,0,1,0,0,1,1,0}, or the like.

According to an embodiment of the present disclosure, in response to the PSS and/or the SSS occupying multiple time domain symbols, a sequence with repetitive characteristics may be adopted in frequency domain, and a sequence of 0 and 1 may be adopted in time domain; or a pseudo noise (PN) sequence may be adopted in frequency domain, and a Zadoff-Chu (ZC) sequence may be adopted in time domain; or a ZC sequence may be adopted in frequency domain, and a PN or wash sequence may be adopted in time domain.

According to embodiments of the present disclosure, the sequence of the synchronization signal with repetitive characteristics can help to reduce the complexity of the terminal for detecting and satisfy expectations at different frequency points.

According to an embodiment of the present disclosure, the synchronization signal transmission method may further include: determining a length of a sequence of the PSS and/or the SSS according to a subcarrier interval.

According to an embodiment of the present disclosure, the synchronization signal transmission method may further include: determining a set of subcarrier intervals, and a correspondence relationship between the set of subcarrier intervals and a sequence length, each set of subcarrier intervals including one or more subcarrier intervals.

Specifically, subcarrier intervals may be divided into a plurality of sets of subcarrier intervals, each set of subcarrier intervals corresponds to one sequence length, and each set of subcarrier intervals includes one or more subcarrier intervals.

For example, in response to the subcarrier interval being {15KHz, 30KHz}, the PSS and/or the SSS corresponds to a sequence length L1, in response to the subcarrier interval being {60KHz, 120KHz}, the PSS and/or the SSS corresponds to a sequence length L2, and in response to the subcarrier interval being {240KHz, 480KHz}, the PSS and/or the SSS corresponds to a sequence length L3; or in response to the subcarrier interval being {15KHz, 30KHz, 60KHz}, the PSS and/or the SSS corresponds to a sequence length L1, in response to the subcarrier interval being {120KHz}, the PSS and/or the SSS corresponds to a sequence length L2, and in response to the subcarrier interval being {240KHz}, the PSS and/or the SSS corresponds to a sequence length L3; or in response to the subcarrier interval being less than or equal to 240KHz, the PSS and/or the SSS corresponds to a sequence length L1, and in response to the subcarrier interval being greater than 240KHz, the PSS and/or the SSS corresponds to a sequence length L2; or in response to the subcarrier interval being less than or equal to 120KHz, the PSS and/or the SSS corresponds to a sequence length L1, in response to the subcarrier interval being greater than 120KHz and less than or equal to 240KHz, the PSS and/or the SSS corresponds to a sequence length L2, and in response to the subcarrier interval being greater than 240KHz, the PSS and/or the SSS corresponds to a sequence length L3.

To enable a narrow-band terminal in Internet of Things to use the PSS and/or the SSS in an eMBB network, a sequence length of the PSS and/or the SSS in 6G may be less than a sequence length (i.e., 127) of the PSS and/or the SSS in 5G NR, and greater than a sequence length (i.e., 62) of the PSS and/or the SSS in 4G LTE. For example, the sequence length of the PSS and/or the SSS in 6G may be 67, 71, 73, 79, or the like.

In addition, a sequence length of a 6G PSS may be less than a sequence length of a 6G SSS, and the sequence length of the 6G SSS may be greater than a sequence length of a 5G SSS, so as to carry more cell IDs. For example, the number of cell IDs may be 1008×h, and h is a positive integer.

FIG. 16 shows a flowchart of a synchronization signal transmission method according to an embodiment of the present disclosure. As shown in FIG. 16, the synchronization signal transmission method according to the embodiment of the present disclosure is performed by a terminal, and includes the following operations S130 to S150.

In operation S130, detecting a first type synchronization signal and acquiring a system message.

In operation S140, detecting a second type synchronization signal according to configuration information in the system message.

In operation S150, selecting, according to a result of detecting the first type synchronization signal and/or the second type synchronization signal, an access resource corresponding to the detected synchronization signal to access a network.

According to an embodiment of the present disclosure, a terminal may detect the synchronization signal through predefined information of the synchronization signal. In response to acquiring an SIB message, the terminal may receive a synchronization signal according to configuration information of the synchronization signal in the SIB message. In response to not acquiring an SIB message, the terminal may detect a first type synchronization signal and acquire a system message, and after acquiring the system message, the terminal may detect another type of synchronization signals according to configuration information in the system message. According to a detection result, the terminal may select an access resource corresponding to the detected synchronization signal to access a network. For example, the terminal may select the access resource corresponding to the detected synchronization signal with the best performance to access the network.

It should be appreciated that the above synchronization signal transmission method performed by a terminal according to the embodiment of the present disclosure corresponds to the various embodiments of the synchronization signal transmission method described with reference to FIG. 7, and therefore, the various examples described with reference to FIG. 7 are also applicable to this embodiment, and are not repeated here.

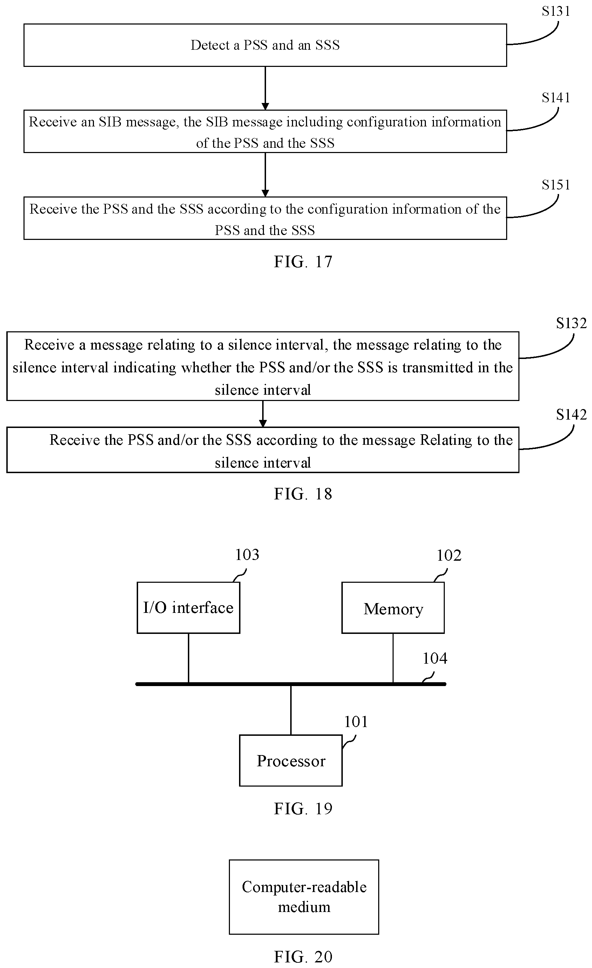

FIG. 17 shows a flowchart of a synchronization signal transmission method according to an embodiment of the present disclosure. As shown in FIG. 17, the synchronization signal transmission method according to the embodiment of the present disclosure is performed by a terminal, and includes the following operations S131 to S151.

In operation S131, detecting a PSS and an SSS, the PSS having a transmission period different from a transmission period of the SSS, or a sequence of the PSS having repetitive characteristics, or a sequence of the SSS having repetitive characteristics, or the PSS being modulated in an ASK modulation mode, or the SSS being modulated in an ASK modulation mode.

In operation S141, receiving an SIB message, the SIB message including configuration information of PSS and SSS.

In operation S151, receiving the PSS and the SSS according to the configuration information of PSS and SSS.

It should be appreciated that the above synchronization signal transmission method performed by a terminal according to the embodiment of the present disclosure corresponds to the various embodiments of the synchronization signal transmission method described with reference to FIGs. 2 to 6 and 15, and therefore, the various examples described with reference to FIGs. 2 to 6 and 15 are also applicable to this embodiment, and are not repeated here.

FIG. 18 shows a flowchart of a synchronization signal transmission method according to an embodiment of the present disclosure. As shown in FIG. 18, the synchronization signal transmission method according to the embodiment of the present disclosure is performed by a terminal, and includes the following operations S132 to S142.

In operation S132, receiving a message relating to a silence interval, the message relating to the silence interval being configured to indicate whether the PSS and/or the SSS are transmitted in the silence interval.

In operation S142, receiving the PSS and/or the SSS according to the message relating to the silence interval.

It should be appreciated that the above synchronization signal transmission method performed by a terminal according to the embodiment of the present disclosure corresponds to the various embodiments of the synchronization signal transmission method described with reference to FIGs. 12 to 14, and therefore, the various examples described with reference to FIGs. 12 to 14 are also applicable to this embodiment, and are not repeated here.

Referring to FIG. 19, an embodiment of the present disclosure further provides an electronic device, including: at least one processor 101; and a memory 102 having at least one computer program stored thereon, the at least one computer program, executed by the at least one processor 101, causes the at least one processor to implement the synchronization signal transmission method according to any embodiment of the present disclosure.

In addition, the electronic device may further include at least one I/O interface 103 connected between the processor 101 and the memory 102, and configured to enable information interaction between the processor 101 and the memory 102.

The processor 101 is a device with a data processing capability, including but not limited to a central processing unit (CPU), or the like. The memory 102 is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) 103 is connected between the processor 101 and the memory 102 to enable information interaction between the processor 101 and the memory 102, and includes, but is not limited to, a data bus or the like.

In some implementations, the processor 101, the memory 102, and the I/O interface 103 are interconnected via a bus 104, and further connected to other components of a computing device.

Referring to FIG. 20, an embodiment of the present disclosure further provides a computer-readable storage medium storing a computer program thereon, the computer program, executed by a processor, causes the processor to implement the synchronization signal transmission method according to any embodiment of the present disclosure.

Those ordinary skills in the art will appreciate that all or some operations of the above described method, or function modules/units in the system and apparatus may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those ordinary skills in the art, the computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium for storing desired information and accessible by a computer. Moreover, it is well known to those ordinary skills in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made without departing from the scope of the present disclosure as set forth in the appended claims.

## Claims

1. A synchronization signal transmission method, comprising:
transmitting a primary synchronization signal (PSS) with a first period; and
transmitting a secondary synchronization signal (SSS) with a second period, wherein the second period is different from the first period.

2. The synchronization signal transmission method according to claim 1, wherein only the PSS is transmitted in a first slot, and both the PSS and the SSS are transmitted in a second slot.

3. The synchronization signal transmission method according to claim 2, wherein in the second slot for transmitting the PSS and the SSS, the PSS and the SSS are transmitted over consecutive time domain symbols.

4. The synchronization signal transmission method according to claim 2, wherein in the second slot for transmitting the PSS and the SSS, the PSS and the SSS are transmitted at an interval of n1 time domain symbols, n1 is a positive integer.

5. The synchronization signal transmission method according to claim 1, wherein
in consecutive first and second slots, only the PSS is transmitted in the first slot, and no synchronization signal is transmitted in the second slot; and
in consecutive third and fourth slots, only the PSS is transmitted in the third slot, and only the SSS is transmitted in the fourth slot.

6. The synchronization signal transmission method according to any one of claims 1 to 5, wherein
the first period comprises a time length selected from one of 5ms, 10ms, 20ms, 40ms, 80ms, 160ms, or 320ms, and
the second period is k1 times the first period, k1 is an integer greater than 1.

7. The synchronization signal transmission method according to claim 1, wherein
in a first slot, the PSS and the SSS are transmitted over consecutive time domain symbols, and
in a second slot, the PSS and the SSS are transmitted over inconsecutive time domain symbols.

8. The synchronization signal transmission method according to claim 7, wherein
in the second slot, the PSS and the SSS are transmitted at an interval of n2 time domain symbols, n2 is a positive integer.

9. The synchronization signal transmission method according to claim 7, wherein
the first slot is set with a third period, and the second slot is set with a fourth period.

10. The synchronization signal transmission method according to claim 9, wherein the third period is the same as the fourth period.

11. The synchronization signal transmission method according to claim 9, wherein the third period is different from the fourth period, the fourth period is k2 times the third period, and k2 is an integer greater than 1.

12. The synchronization signal transmission method according to claim 1, wherein
in a first slot, the PSS and the SSS are transmitted at an interval of y1 time domain symbols, and
in a second slot, the PSS and the SSS are transmitted at an interval of y2 time domain symbols,
y1 and y2 are positive integers.

13. The synchronization signal transmission method according to claim 12, wherein the first slot is set with a fifth period, and the second slot is set with a sixth period.

14. The synchronization signal transmission method according to claim 13, wherein the fifth period is the same as the sixth period.

15. The synchronization signal transmission method according to claim 13, wherein the fifth period is different from the sixth period, and
in response to y1>y2, the fifth period is greater than the sixth period, and the fifth period is k3 times the sixth period, k3 is an integer greater than 1.

16. The synchronization signal transmission method according to claim 2, 7 or 12, wherein one or more first slots and one or more second slots, as an entire, are transmitted in a seventh period.

17. The synchronization signal transmission method according to claim 16, wherein the seventh period comprises m slots comprising h1 first slots and h2 second slots,
m, h1 and h2 are positive integers, and m≥h1+h2.

18. The synchronization signal transmission method according to claim 1, wherein the first period is a non-fixed period.

19. The synchronization signal transmission method according to claim 1, wherein the SSS is transmitted after a preset time being elapsed after transmitting the PSS.

20. The synchronization signal transmission method according to claim 1, wherein a transmission of the PSS indicates whether there is a subsequent transmission of the SSS.

21. The synchronization signal transmission method according to claim 20, wherein the transmission of the PSS indicates whether there is a subsequent transmission of the SSS by one of following modes:
in response to a sequence of the PSS being a first sequence, it indicates that there is a subsequent transmission of the SSS, and in response to the sequence of the PSS being a second sequence different from the first sequence, it indicates that there is no subsequent transmission of the SSS;
in response to a subcarrier interval for transmitting the PSS being a first subcarrier interval, it indicates that there is a subsequent transmission of the SSS, and in response to the subcarrier interval for transmitting the PSS being a second subcarrier interval different from the first subcarrier interval, it indicates that there is no subsequent transmission of the SSS; or
in response to a time domain symbol for transmitting the PSS being an orthogonal frequency division multiplexing (OFDM) symbol, it indicates that there is a subsequent transmission of the SSS, and in response to the time domain symbol for transmitting the PSS being an on-off keying (OOK) symbol, it indicates that there is no subsequent transmission of the SSS.

22. The synchronization signal transmission method according to claim 1, wherein
one SSS is transmitted after one PSS is transmitted; or
one SSS is transmitted after a plurality of PSSs are transmitted, the PSSs being transmitted at equal intervals or unequal intervals.

23. The synchronization signal transmission method according to claim 1, wherein
the PSS and the SSS are located on last two time domain symbols in one slot; or
the PSS and the SSS are located on first two time domain symbols in one slot; or
the PSS is located on a last time domain symbol of a former slot of two adjacent slots, the SSS is located on a first time domain symbol of a latter slot of the two adjacent slots; or
the SSS is located on a last time domain symbol of a former slot of two adjacent slots, the PSS is located on a first time domain symbol of a latter slot of the two adjacent slots.

24. A synchronization signal transmission method, comprising:
transmitting a first type synchronization signal over a first slot, the first type synchronization signal comprising at least one of a first type primary synchronization signal (PSS) or a first type secondary synchronization signal (SSS); and
transmitting a second type synchronization signal different from the first type synchronization signal over a second slot, the second type synchronization signal comprising at least one of a second type PSS or a second type SSS.

25. The synchronization signal transmission method according to claim 24, wherein the first type synchronization signal is different from the second type synchronization signal in at least one of following aspects:
the first type PSS is different from the second type PSS;
the first type SSS is different from the second type SSS;
the first type synchronization signal is transmitted in an amplitude shift keying (ASK) modulation mode, and the second type synchronization signal is transmitted in an orthogonal frequency division multiplexing (OFDM) symbol mode;
the first type synchronization signal is transmitted in an OFDM symbol mode, and the second type synchronization signal is transmitted in an ASK modulation mode;
a time-frequency position relationship between the first type PSS and the first type SSS is different from a time-frequency position relationship between the second type PSS and the second type SSS;
the first type synchronization signal has a sequence different from a sequence of the second type synchronization signal;
the first type synchronization signal has a period different from a period of the second type synchronization signal;
the first type synchronization signal corresponds to a cell ID different from a cell ID corresponding to the second type synchronization signal;
the first type synchronization signal and the second type synchronization signal belong to a same cell, the cell comprises a plurality of subcells, and the first type synchronization signal corresponds to a subcell ID different from a subcell ID corresponding to the second type synchronization signal;
the first type synchronization signal corresponds to a frequency domain bandwidth different from a frequency domain bandwidth corresponding to the second type synchronization signal;
the first type synchronization signal corresponds to a time-domain length different from a time-domain length of the second type synchronization signal;
the first type synchronization signal corresponds to a subcarrier interval different from a subcarrier interval of the second type synchronization signal;
the first type synchronization signal is configured for a detection of a terminal before obtaining a system message, and the second type synchronization signal is configured for a detection of the terminal after obtaining the system message;
the first type synchronization signal is configured for a measurement of a terminal, and the second type synchronization signal is configured for the measurement of terminal and a selection of an access resource;
the first type synchronization signal is transmitted in a periodic mode, and the second type synchronization signal is transmitted in a non-periodic mode or a triggering mode; or
the first type synchronization signal is transmitted by a 6G synchronization signal sequence, and the second type synchronization signal is transmitted by a 5G synchronization signal sequence.

26. The synchronization signal transmission method according to claim 24, wherein
the first type synchronization signal and the second type synchronization signal have a same physical broadcast channel (PBCH); and/or
the first type synchronization signal and the second type synchronization signal have a same system information block (SIB); and/or
the first type synchronization signal and the second type synchronization signal belong to a same cell; and/or
the first type synchronization signal and the second type synchronization signal correspond to different access resources, respectively, and the first type synchronization signal and the second type synchronization signal are both configured for a measurement of a terminal and a selection of access resources of the terminal; and/or
the first type synchronization signal carries information of a first cell ID, and the second type synchronization signal carries information of a second cell ID, wherein information of a cell ID comprises information of the first cell ID and information of the second cell ID; and/or
the first type synchronization signal and the second type synchronization signal are located in a same bandwidth part, wherein the terminal selects access resources based on the first type synchronization signal and the second type synchronization signal; and/or
the first type synchronization signal is a basic type synchronization signal, and the second type synchronization signal is an additional type synchronization signal.

27. A synchronization signal transmission method, comprising:
transmitting a primary synchronization signal (PSS) over orthogonal frequency division multiplexing (OFDM) symbols in a number of t1; and
transmitting a secondary synchronization signal (SSS) over OFDM symbols in a number of t2.

28. The synchronization signal transmission method according to claim 27, further comprising:
determining the number t1 of the OFDM symbols for transmitting the PSS based on a first subcarrier interval for transmitting the PSS; and
determining the number t2 of the OFDM symbols for transmitting the SSS based on a second subcarrier interval for transmitting the SSS.

29. The synchronization signal transmission method according to claim 28, further comprising:
determining a correspondence relationship between each subcarrier interval and the number of the OFDM symbols.

30. The synchronization signal transmission method according to claim 28, further comprising:
determining a set of subcarrier intervals, and a correspondence relationship between the set of subcarrier intervals and the number of the OFDM symbols, wherein the set of subcarrier intervals comprises one or more subcarrier intervals.

31. The synchronization signal transmission method according to claim 28, further comprising:
determining a set of subcarrier intervals, a type of the set of subcarrier intervals, and a correspondence relationship between the set of subcarrier intervals and the number of the OFDM symbols.

32. The synchronization signal transmission method according to claim 27, wherein
the PSS and the SSS are alternately transmitted in response to at least one of t1 or t2 being greater than 1.

33. A synchronization signal transmission method, comprising:
transmitting at least one of a primary synchronization signal (PSS) or a secondary synchronization signal (SSS) in an amplitude shift keying (ASK) modulation mode.

34. The synchronization signal transmission method according to claim 33, further comprising:
transmitting one of the PSS or the SSS over orthogonal frequency division multiplexing (OFDM) symbols.

35. The synchronization signal transmission method according to claim 34, wherein
a number t3 of ASK symbols for transmitting the PSS or the SSS is k4 times a number t4 of OFDM symbols for transmitting the SSS or the PSS, k4 is an integer greater than 1.

36. A synchronization signal transmission method, comprising:
configuring and transmitting a message relating to a silence interval, the message relating to the silence interval being configured to indicate whether at least one of a primary synchronization signal (PSS) or a secondary synchronization signal (SSS) is transmitted in the silence interval; and
transmitting at least one of the PSS or the SSS based on the message relating to the silence interval.

37. The synchronization signal transmission method according to claim 36, wherein
the message relating to the silence interval is transmitted through a system information block (SIB) message; or
the message relating to the silence interval is transmitted through a silence indication signal.

38. The synchronization signal transmission method according to claim 36, wherein the silence interval is generated by one of:
being triggered through a downlink proprietary signal;
being triggered through downlink control information;
determining whether the silence interval is to be triggered according to whether latest PSS and SSS exist prior to the silence interval; or
determining whether the silence interval is to be triggered according to whether first PSS and SSS exist after the silence interval starts.

39. The synchronization signal transmission method of claim 36, further comprising:
transmitting configuration information of the silence interval, wherein the configuration information of the silence interval comprises at least one of:
a start time of the silence interval;
a duration of the silence interval;
a period of the silence interval;
a triggering mode of the silence interval; or
a transmission period for transmitting at least one of the PSS or the SSS in the silence interval.

40. The synchronization signal transmission method according to claim 36, wherein
determining, based on a position of at least one of the PSS or the SSS, a transmission position for transmitting the message relating to the silence interval, or
configuring the transmission position for transmitting the message relating to the silence interval through an SIB.

41. A synchronization signal transmission method, comprising:
transmitting a primary synchronization signal (PSS); and
transmitting a secondary synchronization signal (SSS),
wherein at least one of a sequence of the PSS or a sequence of the SSS has repetitive characteristics.

42. The synchronization signal transmission method according to claim 41, wherein
at least one of the sequence of the PSS or the sequence of the SSS corresponds to a plurality of sequences, and are repeatedly and alternately mapped with the plurality of sequences.

43. The synchronization signal transmission method according to claim 41, wherein for at least one of the PSS or the SSS having a sequence with repetitive characteristics,
synchronization channels at different frequency points correspond to different numbers of repetitions; or
the number of repetitions is determined based on a subcarrier interval.

44. The synchronization signal transmission method of claim 41, further comprising:
determining at least one of a sequence length of the sequence of the PSS or a sequence length of the sequence of the SSS based on a subcarrier interval.

45. The synchronization signal transmission method of claim 44, further comprising:
determining a set of subcarrier intervals, and a correspondence relationship between the set of subcarrier intervals and a sequence length, wherein the set of subcarrier intervals comprises one or more subcarrier intervals.

46. A synchronization signal transmission method, performed by a terminal, comprising:
detecting a first type synchronization signal and acquiring a system message;
detecting a second type synchronization signal based on configuration information in the system message; and
selecting, based on a result of detecting at least one of the first type synchronization signal or the second type synchronization signal, an access resource corresponding to a detected synchronization signal to access a network.

47. A synchronization signal transmission method, performed by a terminal, comprising:
detecting a primary synchronization signal (PSS) and a secondary synchronization signal (SSS), the PSS having a transmission period different from a transmission period of the SSS, or a sequence of the PSS having repetitive characteristics, or a sequence of the SSS having repetitive characteristics, or the PSS being modulated in an amplitude shift keying (ASK) modulation mode, or the SSS being modulated in an ASK modulation mode;
receiving a system information block (SIB) message, the SIB message comprising configuration information of the PSS and the SSS; and
receiving the PSS and the SSS based on the configuration information of the PSS and the SSS.

48. A synchronization signal transmission method, performed by a terminal, comprising:
receiving a message relating to a silence interval, the message relating to the silence interval being configured to indicate whether at least one of a primary synchronization signal (PSS) or a secondary synchronization signal (SSS) is transmitted in the silence interval; and
receiving at least one of the PSS or the SSS based on the message relating to the silence interval.

49. An electronic device, comprising:
a memory having at least one computer program stored thereon; and
at least one processor;
wherein the at least one program, executed by the at least one processor, causes the at least one processor to implement the synchronization signal transmission method according to any one of claims 1 to 48.

50. A computer-readable storage medium having a computer program stored thereon, the computer program, executed by a processor, causes the processor to implement the synchronization signal transmission method according to any one of claims 1 to 48.
